# FASCICULE DE BREVET EUROPEEN

(11) **EP 3 359 978 B1**
(45) Date de publication et mention de la délivrance du brevet: **08.01.2020**
(21) Numéro de dépôt: 16754305.7
(22) Date de dépôt: 23.08.2016
(51) Int. Cl.: G01S 13/90, G01S 13/86, G06T 7/00

(54) **METHODE DE TRAITEMENT D'UNE IMAGE RADAR DE TYPE SAR ET METHODE DE DETECTION DE CIBLE ASSOCIEE**
VERFAHREN ZUR VERARBEITUNG EINES SAR-BILDES UND ZUGEHÖRIGES ZIELERFASSUNGSVERFAHREN
METHOD FOR PROCESSING AN SAR IMAGE AND ASSOCIATED TARGET-DETECTING METHOD

(30) Priorité: 09.10.2015 FR 1502127
(43) Date de publication de la demande: 15.08.2018
(73) Titulaire: THALES, 92400 Courbevoie (FR)
(72) Inventeur: GUERRINI, Gilles, 33610 Cestas (FR); JOSEPH, Bernard, 33610 Cestas (FR); SFEZ, Thierry, 75012 Paris (FR)
(74) Mandataire: Joubert, Cécile
(86) Numéro de dépôt international: PCT/EP2016/069874
(87) Numéro de publication internationale: WO 2017/060000

(56) Documents cités:
- EP-A1- 2 180 337
- US-A1- 2012 274 505
- N. MERKLE ET AL: "A NEW APPROACH FOR OPTICAL AND SAR SATELLITE IMAGE REGISTRATION", ISPRS ANNALS OF PHOTOGRAMMETRY, REMOTE SENSING AND SPATIAL INFORMATION SCIENCES, vol. II-3/W4, 25 mars 2015 (2015-03-25), pages 119-126, XP055271904, DOI: 10.5194/isprsannals-II-3-W4-119-2015
- SPORTOUCHE H ET AL: "Building detection and height retrieval in urban areas in the framework of high resolution optical and SAR data fusion", GEOSCIENCE AND REMOTE SENSING SYMPOSIUM (IGARSS), 2010 IEEE INTERNATIONAL, IEEE, PISCATAWAY, NJ, USA, 25 juillet 2010 (2010-07-25), pages 3660-3663, XP031810790, ISBN: 978-1-4244-9565-8
- PALUBINSKAS GINTAUTAS: "Framework for multi-sensor data fusion using template based matching", 2015 IEEE INTERNATIONAL GEOSCIENCE AND REMOTE SENSING SYMPOSIUM (IGARSS), IEEE, 26 juillet 2015 (2015-07-26), pages 621-624, XP032806088, DOI: 10.1109/IGARSS.2015.7325840
- ABDELFATTAH R ET AL: "Interferometric SAR image coregistartion based on the Fourier-Mellin invariant descriptor", IGARSS 2002. IEEE 2002 INTERNATIONAL GEOSCIENCE AND REMOTE SENSING SYMPOSIUM. TORONTO, SWEDEN, JUNE 24 -28, 2002; [IEEE INTERNATIONAL GEOSCIENCE AND REMOTE SENSING SYMPOSIUM], NEW YORK, NY : IEEE, US, vol. 3, 24 juin 2002 (2002-06-24), pages 1334-1336, XP010598210, ISBN: 978-0-7803-7536-9
- JOSE CONCALVES: "Analysis of SAR image geo-location accurcy for mapping", SPIE, PO BOX 10 BELLINGHAM WA 98227-0010 USA, vol. 5236, 2004, - 2004, pages 190-199, XP040252503,
- Gintautas Palubinskas ET AL: "INFORMATION EXTRACTION USING OPTICAL AND RADAR REMOTE SENSING DATA FUSION", ASPRS 2012 Annual Conference Sacramento, California  March, 1 janvier 2012 (2012-01-01), pages 19-23, XP055271915, Extrait de l'Internet: URL:http://elib.dlr.de/75485/1/Palubinskas .pdf

## Description

### DOMAINE DE L'INVENTION

L'invention concerne le domaine général des radars aéroportés ou spatiaux à synthèse d'ouverture. La présente invention concerne plus particulièrement une méthode de traitement d'une image radar de type SAR pour localiser des éléments géographiques présents dans l'image et une méthode de détection de cibles utilisant la méthode de traitement.

### ETAT DE LA TECHNIQUE

Les radars à synthèse d'ouverture (ou SAR pour Synthetic Aperture Radar selon la terminologie anglo-saxonne) sont largement utilisés dans les activités d'analyse à distance de zones géographiques, par exemple la détection de cibles de ces zones, à partir de leur réflectivité radar. Une image SAR permet une vision typiquement à 30 km et par tout temps.

L'analyse de l'image SAR, par exemple la localisation précise de certains éléments géographiques et la détection de cibles présents dans l'image, est rendue complexe par l'existence d'artefacts tels que des points brillants et/ou saillants provenant par exemple d'angles réfléchissants de toits de bâtiments. De plus, il est délicat de délimiter les contours d'un bâtiment en imagerie SAR dans la mesure où la réponse de chacun de ses éléments peut être très différente.

Il existe aujourd'hui de nombreux algorithmes et traitements dédiés à la détection et l'identification de cible fixe sur de l'imagerie radar de type SAR très haute résolution. Les résultats obtenus en zone rurale dégagée valident la robustesse de ces traitements à partir du moment où le type de cible à rechercher est connue (char, camion, avion, ...). En revanche, en zone urbaine, le taux de fausses détections reste important du fait de la présence d'artefacts et pose un problème à l'opérateur en charge de l'interprétation des images pour la détection de cibles réelles, en particulier lorsque les cibles recherchées sont proches des bâtiments.

Pour améliorer l'analyse des images SAR, des travaux ont été menés sur la fusion de données radar et optique.

L'imagerie optique ne permet pas de détecter facilement des cibles mais donne une image des zones urbaines permettant de délimiter avec précision l'emplacement géographique d'éléments de plus grande taille dont l'emplacement ne change pas au cours du temps, dits « invariants », tels des structures fixées au sol, par exemple des bâtiments.

Ainsi, l'utilisation complémentaire d'images SAR et optiques permet d'obtenir une connaissance améliorée de l'environnement.

Une première méthode de fusion de données SAR et optique utilise des images SAR et optroniques (par exemple à l'aide d'un pod optronique) décorrélées temporellement. Cela présente l'avantage de faire des traitements post-mission ou post-acquisition mais il n'y a pas de transformation géométrique spatiale de l'image SAR par rapport à l'image optique, ce qui empêche de superposer les deux images.

En effet, ces deux images sont prises selon deux plans différents et avec des lignes de visées différentes et le type de projection d'un objet 3D sur un plan n'est pas le même dans le cas d'une image SAR et d'une image optique. Prenons l'exemple selon lequel le sol observé est un plan horizontal. Dans le cas d'une image optique, les objets en 3D sur le plan horizontal du sol ainsi que le plan horizontal du sol sont projetés sur le plan orthogonal à la ligne de visée du capteur optique ; ainsi, dans le cas où la ligne de visée est orthogonale au plan du sol (cas où le capteur optique est à la verticale de la zone observée), alors l'image optique obtenue est identique au plan du sol sur lequel seront superposés les projections sur le plan horizontal des objets 3D.

Dans le cas d'une image SAR, les objets en 3D sur le plan horizontal du sol ainsi que le plan horizontal du sol sont projetés sur le plan contenant la ligne de visée du radar (où direction du faisceau de l'antenne radar) et la droite orthogonale à la ligne de visée et appartenant au plan horizontal ; ainsi, dans le cas où le radar est rasant par rapport à la surface observée, l'image radar obtenue est identique au plan du sol sur lequel seront superposés les projections sur le plan horizontal des objets 3D.

Ceci a pour conséquence que l'on ne peut pas corréler facilement des données géographiques qui ne sont pas vues selon un même axe de visée. Les deux images SAR et optroniques sont acquises et affichées sur deux visualisations différentes. Cette technique a l'avantage de pouvoir traiter les deux images indépendamment mais n'apportent pas d'aide à l'opérateur pour corréler les informations des deux images.

La publication de N. Merkle et al « A new approach for optical and SAR satellite registration », ISPRS ANNALS OF PHOTOGRAMMETRY, REMOTE SENSING AND SPATIAL INFORMATION SCIENCES, vol II-3/W4, 25 mars, pages 119-126, décrit une méthode de superposition « registration » d'une image SAR et d'une image optique, par détection de ronds-points dans l'image optique.

La publication de Sportouche et la « Building détection and height retrieval in urban areas in the framework of high resolution optical and SAR data fusion » GEOSCIENCE AND REMOTE SENSING SYMPOSIUM (IGARSS), 2010 IEEE INTERNATIONAL, 25 juillet 2010, pages 3660-3663, décrit une reconstruction 3D d'immeubles à partir des informations combinées d'une image optique et d'une image SAR d'une même zone.

Un but de la présente invention est de palier aux inconvénients précités en proposant une méthode de traitement de l'image SAR pour localiser des éléments géographiques présents à l'aide d'une image optique « augmentée » par des données graphiques additionnelles. Cette localisation facilite la détection de cibles dans l'image SAR.

### DESCRIPTION DE L'INVENTION

La présente invention a pour objet une méthode de détection de cible comprenant un traitement d'une image radar de type SAR, comprenant les étapes consistant à :
- Charger une image radar initiale de type SAR d'une première zone,
- Charger une image optique initiale d'une deuxième zone recouvrant au moins partiellement la première zone, lesdites images initiales ayant été le cas échéant prétraitées de sorte qu'elles présentent un même axe d'acquisition,
- Charger des données graphiques additionnelles associées à l'image optique initiale et relatives à des éléments géographiques présents dans ladite image optique initiale, les éléments géographiques comprenant des structures fixées au sol et les données graphiques additionnelles comprenant des formes géométriques approchées desdites structures fixées au sol,
- Traiter au moins une des deux images initiales de manière à les rendre apte à être superposées dans une zone de recouvrement entre la première et la deuxième zone, pour obtenir une image radar superposée (I_{SAR/sup}) et une image optique superposée (I_{opt/sup}),
- Déterminer des données graphiques additionnelles superposées (Dataₛᵤₚ) à partir des données graphiques additionnelles (Data) et de l'image optique superposée (I_{opt/sup}),
- Localiser des éléments géographiques présents dans l'image SAR superposée au moins à partir desdites données graphiques additionnelles superposées.
- Déterminer des positions de cibles potentielles à partir de l'image SAR superposée,
- Identifier d'éventuelles fausses alarmes en comparant la position de cibles potentielles identifiées dans l'image radar superposée avec des formes géométriques approchées de structures fixées au sol localisées à l'étape de localisation.

Avantageusement l'étape de traitement est effectuée sur l'image optique uniquement, l'image radar initiale étant alors égale à l'image radar superposée.

Avantageusement, l'image radar initiale est ortho-rectifiée. Avantageusement l'image optique initiale est une image par satellite ortho-rectifiée.

Préférentiellement, les éléments géographiques comprennent des frontières et/ou des réseaux de chemin de fer et/ou des réseaux hydrographiques et/ou des contours d'élévations et/ou des côtes, et/ou des contours approchés de structures fixées au sol et/ou des aéroports et/ou des lieux habités et/ou des index de noms géographiques.

Préférentiellement les données graphiques additionnelles sont affichées dans les images optiques sous la forme de traits et/ou de lignes et/ou de contours et /ou de formes géométriques et/ou de caractères. Avantageusement les données graphiques additionnelles sont des informations vectorielles cartographiques de type Vmap.

Selon un mode de réalisation l'étape de traitement comprend une étape de détermination d'au moins un ensemble de paramètres de recalage comprenant un facteur d'homothétie, un angle de rotation, et une distance de translation.

Préférentiellement l'étape de détermination des données graphiques additionnelles superposées comprend une étape consistant à appliquer ledit ensemble de paramètres de recalage aux données graphiques additionnelles pour obtenir les données graphiques additionnelles superposées. Avantageusement l'étape de détermination des paramètres de recalage s'effectue à partir de la transformée de Fourrier-Mellin.

Selon un mode de réalisation l'étape de localisation comprend une étape de fusion des données graphiques additionnelles superposées dans l'image radar superposée.

Selon un mode de réalisation :
* la cible potentielle est considérée comme une fausse alarme lorsque sa position est localisée à l'intérieur d'une structure fixée au sol,
* la cible potentielle est considérée comme une fausse alarme lorsque sa position est localisée à une distance (d) d'une structure fixée au sol inférieure à une distance minimum prédéterminée,
* la cible potentielle est considérée comme une cible réelle lorsque sa position est localisée à une distance d'une structure fixée au sol supérieure ou égale à la distance minimum prédéterminée.

D'autres caractéristiques, buts et avantages de la présente invention apparaîtront à la lecture de la description détaillée qui va suivre et en regard des dessins annexés donnés à titre d'exemples non limitatifs et sur lesquels :
La figure 1 illustre les étapes de la méthode 10 de traitement d'une image radar de type SAR formant partie de l'invention.
La figure 2 illustre un exemple d'image radar I_{SAR} chargée, convertie en noir et blanc.
La figure 3 illustre une image optique initiale correspondant à une image satellite ortho-rectifiée.
La figure 4 illustre l'image optique satellite de la figure 3 enrichie de données graphiques additionnelles sous la forme de formes géométriques de type polygones.
La figure 5 illustre le traitement d'une image initiale à recaler illustrée figure 5b, pour la rendre superposable à une image de référence illustrée figure 5a.
La figure 5c illustre l'image à recaler mise à l'échelle en appliquant un facteur d'homothétie h et l'image 5d l'image à recaler ayant subi une rotation pour que l'orientation soit identique à celle de l'image de référence.
La figure 6 illustre l'image optique correspondant à l'image optique de la figure 3 ayant subit la transformation pour la rendre superposable à l'image SAR de la figure 2.
La figure 7 illustre le résultat de la transformation opérée sur les données graphiques additionnelles pour les rendre superposables à l'image SAR de référence, sous la forme d'un masque binaire, qui correspond aux bâtiments présent dans l'image optique de la figure 4.
La figure 8 illustre l'image optique superposée enrichie des données graphiques additionnelles superposées.
La figure 9 schématise un exemple d'algorithme réalisant une transformation de Fourier Mellin.
La figure 10 schématise une méthode de détection de cibles selon l'invention comprenant un traitement tel que décrit précédemment..
La figure 11 illustre la comparaison entre la position de cibles potentielles identifiées dans l'image radar superposée avec les formes géométriques approchées de structures fixées au sol localisées à l'étape de localisation.
La figure 12 illustre une variante de étape de comparaison de la méthode de détection de cibles selon l'invention.
Les figures 13 à 15 illustrent un exemple de mise en œuvre de cette méthode de détection pour le cas dans lequel l'image radar SAR est affichée à côté de l'image représentant les contours des structures fixées au sol.
La figure 13a illustre l'image I_{SAR} dans laquelle un point brillant, correspondant à une cible potentielle telle un char, est détecté. La figure 13b illustre des données superposées correspondant à la position précise du contour bâtiment générée selon la méthode de traitement selon l'invention, pour le cas dans lequel la distance de la cible potentielle au bâtiment est trop faible. Il s'agit d'un artefact, et donc la cible potentielle est classée comme une fausse alerte.

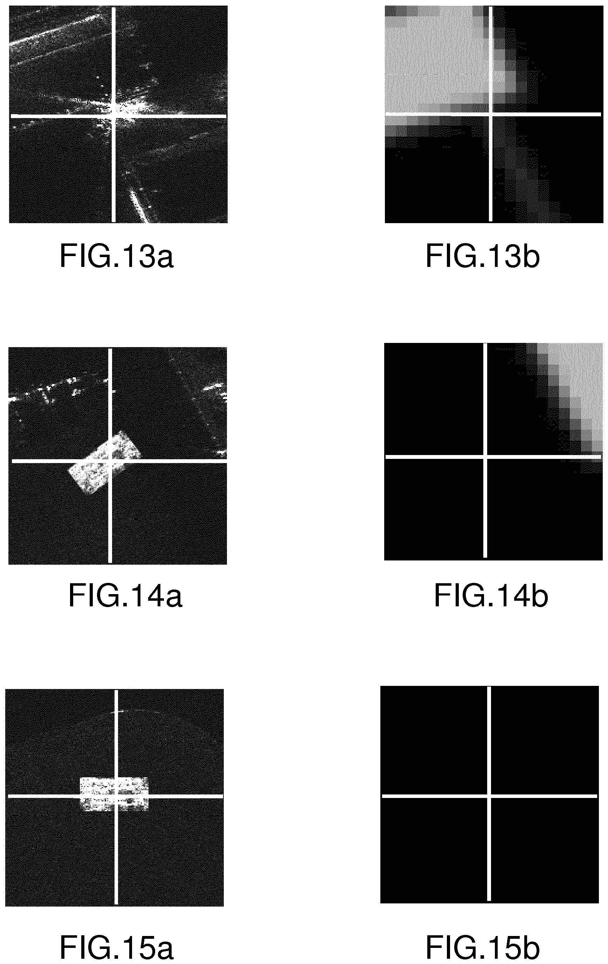

Dans le cas de la figure 14, la figure 14a illustre la cible détectée et la figure 14b illustre le bâtiment dans le cas selon lequel la cible est suffisamment éloignée d'un bâtiment. La cible détectée est classée comme cible réelle. Dans le cas de la figure 15, la cible détectée en 15a est éloignée de tout bâtiment (aucun bâtiment sur 15b) et est donc classée comme cible réelle.

### DESCRIPTION DETAILLEE DE L'INVENTION

La méthode 20 selon l'invention comprend tout d'abord une partie consistant en une méthode de traitement 10 d'une image radar SAR.

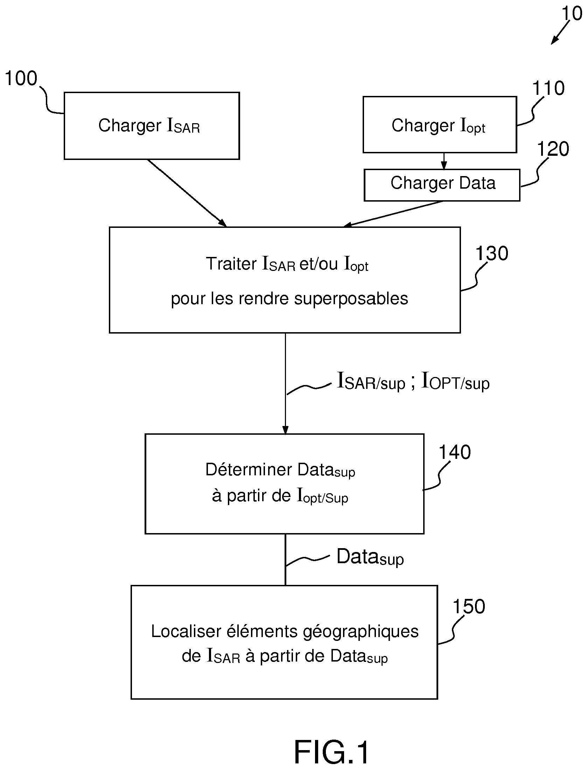

La figure 1 illustre les étapes de la méthode 10 de traitement d'une image radar de type SAR formant partie de l'invention. La méthode 10 comprend une étape 100 de chargement d'une image radar initiale I_{SAR} d'une première zone, typiquement haute résolution, c'est-à-dire ici dont la résolution est meilleure que 5m. On cherche à traiter l'image SAR I_{SAR} de manière à mieux repérer, localiser, délimiter dans cette image des éléments géographiques tels des structures fixées au sol (par exemple des bâtiments), des routes, des aéroports, des bases aériennes, des rails de chemin de fer et gares ferroviaires, lieux habités...

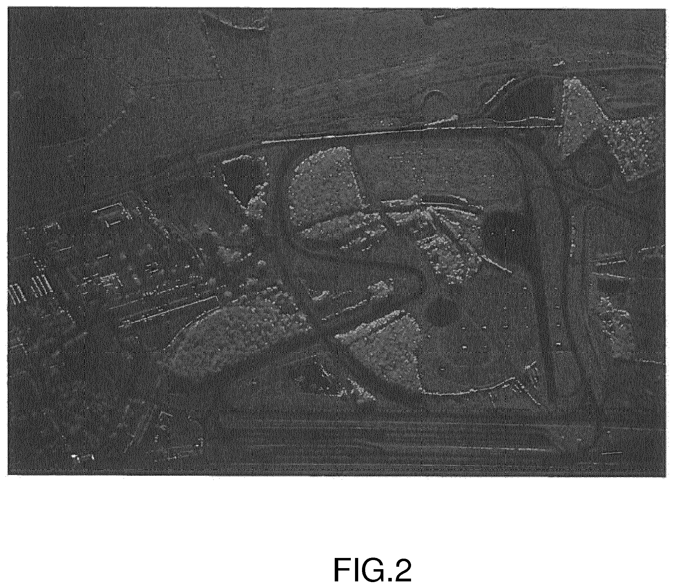

La figure 2 illustre un exemple d'image radar I_{SAR} chargée, convertie en noir et blanc. Une image I_{SAR} issue d'un radar présente typiquement des niveaux de gris, non représentés. Cette image est typiquement géo-référencée, c'est-à-dire que l'on connait les coordonnées longitude et latitude de points de cette image.

Sur l'exemple de la figure 2 l'image SAR initiale est une image issue du radar qui a été prétraitée de manière à être rendue ortho-rectifiée. L'ortho-rectification est une correction géométrique d'image qui a pour but d'obtenir une image identique au plan sol sur lequel sont superposées les projections sur le plan horizontal des objets 3D. Pour une image optique, cela correspond à un axe de visée transformé pour être orthogonal au terrain dans le cas où celui-ci est horizontal (image acquise depuis la verticale, en télédétection, on dit "au nadir"), et pour une image SAR l'ortho rectification correspond à un axe de visée transformé en un axe de visée du radar rasant. Selon un autre exemple, l'image SAR est l'image directement issue d'un radar selon l'état de la technique.

La méthode 10 formant partie de l'invention comprend également une étape de chargement 110 d'une image optique initiale Iₒₚₜ d'une deuxième zone recouvrant au moins partiellement la première zone.

On s'intéresse ensuite à la zone de recouvrement des deux zones, pour laquelle on dispose des deux images, SAR et optique. Le recouvrement est par exemple déterminé du fait que les deux images, SAR et optique, sont géo-référencées, dès le départ ou suite à un traitement.

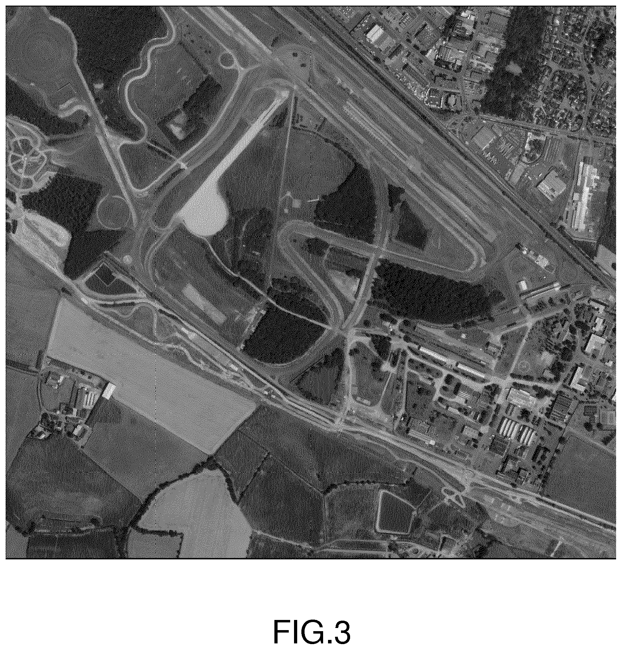

Selon un premier mode de réalisation l'image optique initiale est par exemple une image satellite ortho-rectifiée telle qu'illustrée sur la figure 3.

Selon un deuxième mode de réalisation, l'image optique initiale est obtenue à partir d'une caméra embarquée sur un aéronef.

L'image optique est typiquement obtenue dans le spectre visible ou dans le spectre infra rouge.

Lorsque les deux images SAR et optiques sont ortho-rectifiées, elles présentent la même ligne de visée, correspondant à la verticale, et aucun traitement préalable n'est nécessaire.

Lorsqu'au moment de l'acquisition des images SAR et optiques ne présentent pas un même axe d'acquisition, un prétraitement est effectué sur ces images pour générer des images initiales de sorte qu'elles présentent un même axe d'acquisition.

C'est le cas par exemple lorsque l'image optique provient d'une image optronique obtenue par une caméra embarquée sur un aéronef et l'image radar SAR provient directement du radar

Dans une étape 120 on charge des données graphiques additionnelles Data associées à l'image optique initiale et relatives à des éléments géographiques présents dans l'image Iₒₚₜ, ces données permettant d'améliorer la connaissance de l'environnement. Ces données graphiques sont typiquement des données virtuelles affichées dans l'image sous la forme de lignes, traits, contours, formes géométriques, zones de différentes couleurs, caractères... qui se superposent à l'image optique initiale, et précisent/représentent des éléments géographiques tels que : structures fixées au sol telles des bâtiments, routes, réseaux de chemin de fer, réseaux hydrographiques, côtes, lieux habités, frontières, contours d'élévation, index des noms géographiques, aéroports.

Ces données graphiques additionnelles sont par exemple fournies (ou vendues) par des organismes publics (par exemple l'institut Géographique National) ou privés (Google ...), sous la forme de données dites « vectorielles » associée à une image optique typiquement satellitaire. Un exemple de données de ce type sont des informations vectorielles cartographiques, par exemple de type Vmap pour Vector Map, également dénommées Vector Smart Map. Ces données existent selon différents niveaux de détails (Vmap0 à Vmap2) permettant d'accéder à des informations sur l'environnement avec une grande précision (typiquement quelques mètres jusqu'à 1 mètre. On parle de données vectorielles car une surface constituée d'un grand nombre de pixels peut être réduite à la connaissance des positions d'un nombre limité de points caractéristiques.

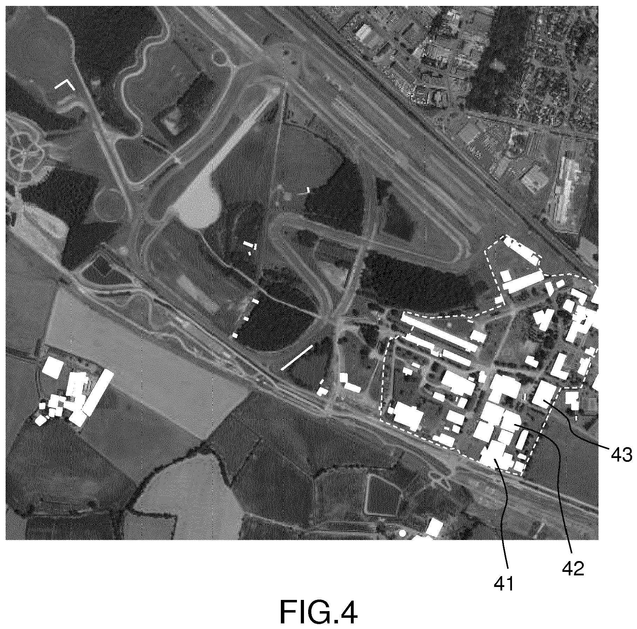

La figure 4 illustre l'image optique satellite de la figure 3 enrichie de données graphiques additionnelles sous la forme de formes géométriques de type polygones 41, 42, 43 ...représentant les bâtiments.

Lorsque l'image optique est obtenue à partir d'une caméra embarquée présentant une première ligne de visée déterminée, une variante est de générer l'image optique initiale en « ortho-rectifiant » l'image issue de la caméra embarquée. Les données graphiques additionnelles sont obtenues en superposant l'image optique initiale ortho-rectifiée obtenue à une image optique satellite elle-même ortho-rectifiée pour laquelle on dispose de données graphiques additionnelles.

La méthode 10 formant partie de l'invention comprend en outre une étape 130 consistant à traiter au moins une des deux images initiales, I_{SAR} et/ou Iₒₚₜ, de manière à les rendre apte à être superposées dans une zone de recouvrement entre la première et la deuxième zone, pour obtenir une image radar superposée I_{SAR/sup} et une image optique superposée I_{opt/sup}. Ces deux images superposées sont donc des images représentant une même scène à une même échelle et selon une même orientation. Un pixel repéré dans une des images correspond au même point géographique que le pixel de mêmes coordonnées repérées dans l'autre image. Cette étape de traitement est également dénommée recalage.

Selon une variante préférée l'étape de traitement est effectuée sur l'image optique Iₒₚₜ uniquement, l'image radar initiale I_{SAR} étant alors égale à l'image radar superposée I_{SAR/sup}.

Pour utiliser des données graphiques additionnelles associées à des images satellites (type google / Vmap), une variante préférée est que la ligne de visée commune soit la perpendiculaire au sol.

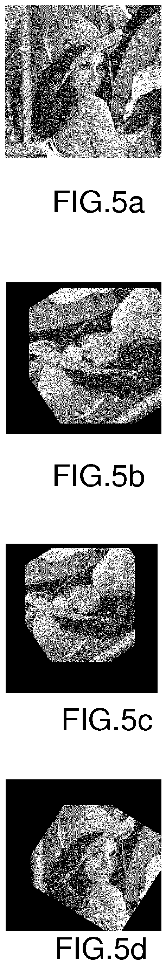

Partant de deux images présentant un même axe d'acquisition (même ligne de visée), le traitement consiste à opérer sur au moins une image une similitude, soit une homothétie (facteur d'homothétie h), une rotation (angle de rotation α) et une translation (distance de translation d), comme illustré figures 5a à 5d avec une image type. Ainsi l'étape de traitement comprend une étape de détermination d'au moins un ensemble Prec de paramètres de recalage comprenant le facteur d'homothétie h (qui peut être identique pour toute l'image ou local, en cas de déformation non uniforme de l'image optique), l'angle de rotation α et une distance de translation d. Lorsque le traitement est opéré sur une seule image, l'autre étant l'image de référence, un ensemble unique de paramètres est déterminé.

Dans la suite la variante dans laquelle l'image SAR I_{SAR} est l'image de référence, le traitement étant opéré sur l'image optique Iₒₚₜ uniquement, est décrite. Le traitement consiste à opérer homothétie/rotation/translation sur l'image optique, de manière à la recaler sur l'image SAR. Mais cette variante préférée n'est pas limitative, le traitement pouvant être opéré sur l'image SAR uniquement ou sur les deux images.

La figure 5a illustre l'image de référence, la figure 5b l'image à recaler, la figure 5c l'image à recaler mise à l'échelle en appliquant un facteur d'homothétie h et l'image 5d l'image à recaler ayant subi une rotation pour que l'orientation soit identique à celle de l'image de référence. A partir de l'image 5d, on détermine la distance de translation pour obtenir une image apte à être superposée à l'image de référence.

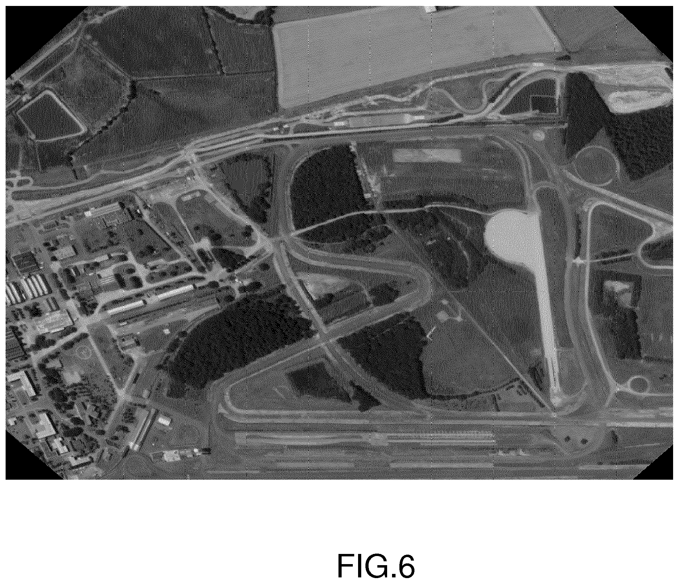

La figure 6 illustre l'image optique I_{opt/sup} correspondant à l'image optique de la figure 3 ayant subit la transformation pour la rendre superposable à l'image SAR I_{SAR} de la figure 2.

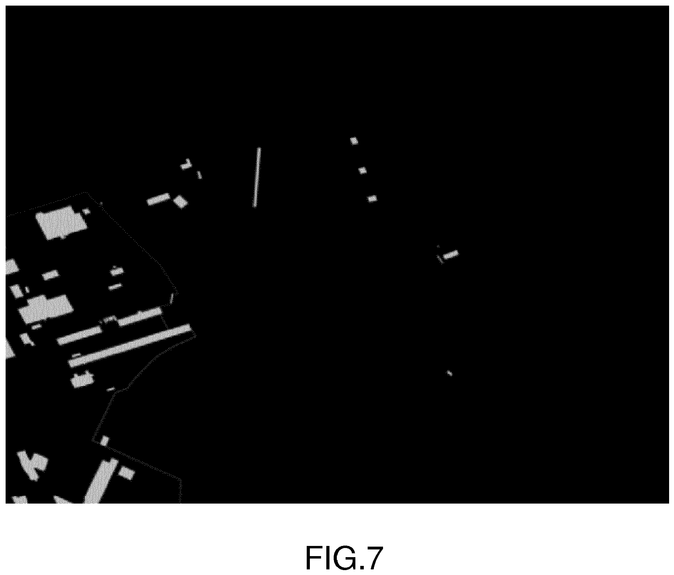

La méthode de traitement 10 formant partie de l'invention comprend également une étape 140 consistant à déterminer des données graphiques additionnelles superposées Dataₛᵤₚ à partir de l'image optique superposée I_{opt/sup}. La transformation opérée sur l'image optique est opérée sur les données graphiques additionnelles pour les rendre superposables à l'image SAR de référence. Le résultat de la transformation est Dataₛᵤₚ , tel qu'illustré sur la figure 7 par exemple sous la forme d'un masque binaire, qui correspond aux bâtiments Data présent dans l'image optique de la figure 4 et ayant subi la même transformation que l'image optique pour être superposables à l'image SAR.

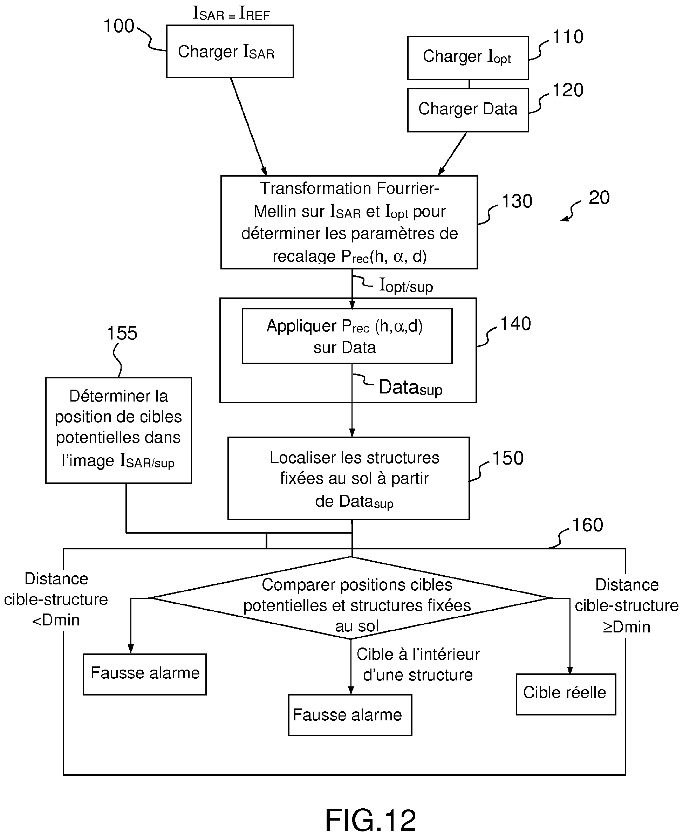

Selon un mode de réalisation, lorsque l'étape de traitement 130 comprend l'étape de détermination de l'ensemble Prec (h,α, d), l'étape de détermination de Dataₛᵤₚ comprend une étape consistant à appliquer les paramètres (h,α, d) aux données additionnelles pour obtenir Dataₛᵤₚ tel qu'illustré figure 12. Ainsi le recalage effectué sur l'image optique permet de déterminer les paramètres de recalage à appliquer sur les données graphiques additionnelles. Cela permet d'économiser du temps de calcul puisque pour traiter les données Data on réutilise les paramètres déterminés pour l'image optique.

Enfin une dernière étape 150 consiste à localiser des éléments géographiques présents dans l'image SAR superposée I_{SAR/sup}, égal à I_{SAR} dans la variante préférée, au moins à partir desdites données graphiques additionnelles superposées Dataₛᵤₚ.

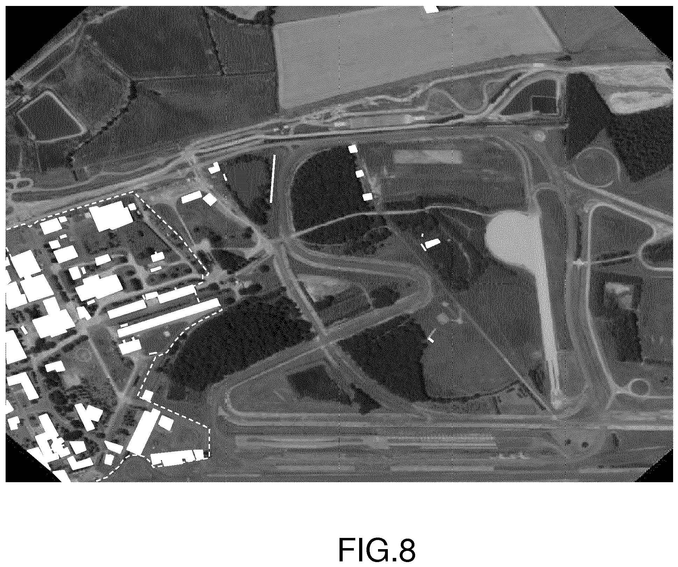

Selon une première variante, l'image SAR superposée (par exemple l'image de la figure 2) et l'image optique superposée enrichie des données graphiques additionnelles superposées (c'est à dire que les informations graphiques sont intégrées dans l'image optique tel qu'illustré figure 8) sont affichées côte à côte et un opérateur réalise visuellement la localisation dans l'image SAR par comparaison des deux images.

Selon une deuxième variante, seules les données graphiques additionnelles superposées (par exemple illustrées figure 7) sont affichées côte à côte avec l'image SAR superposée.

Selon une troisième variante, l'étape de localisation comprend une étape de fusion des données graphiques additionnelles superposées Dataₛᵤₚ dans l'image radar superposée I_{SAR/sup}. Préférentiellement, la fusion s'opère par intégration des données Dataₛᵤₚ dans l'image radar superposée, l'opérateur localisant visuellement directement les éléments géographiques correspondants dans l'image radar superposée.

Selon une quatrième variante préférée, c'est un traitement d'image automatique qui utilise les données fusionnées pour identifier des fausses alarmes, tel que décrit plus loin.

Selon un mode de réalisation préféré, l'étape de traitement/recalage s'effectue à partir de la transformée de Fourier-Mellin ou TFM, qui permet la condition d'iso-référencement et permet d'estimer la transformation de type similitude entre deux images. L'utilisation de la TFM constitue une approche de recalage automatique multicapteurs radar/optique, qui partant uniquement des données images en entrée, sans connaissance à priori des paramètres des capteurs d'images, arrive à trouver une transformation géométrique permettant de recaler les images. Cette approche permet ainsi de réaliser le recalage alors que les grandeurs de prise de vue ne sont pas toutes accessibles.

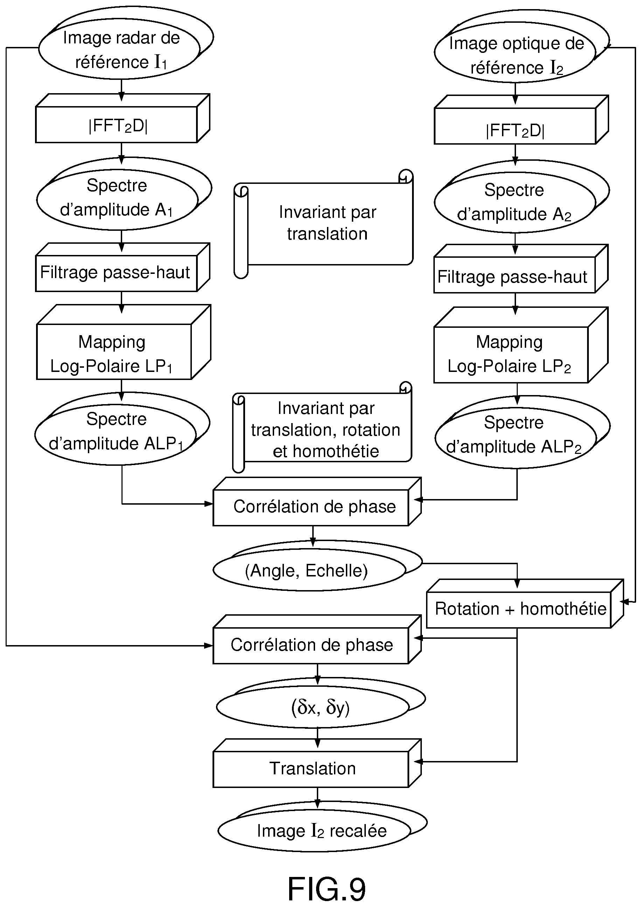

Un exemple d'algorithme réalisant une transformation de Fourier Mellin est illustré figure 9. L'image de référence est l'image SAR et l'image optique est recalée sur l'image SAR. L'obtention des paramètres de recalage s'obtient en effectuant des traitements sur les deux images. La première étape de l'algorithme consiste à représenter les images dans le domaine spectral. Pour rendre le processus de Transformée de Fourier Discrète (TFD) plus rapide, on utilise l'algorithme de TFD rapide appelé Fast Fourier Transform (FFT). Les images en sortie de l'algorithme de la FFT sont complexes : on en extrait les modules pour travailler avec les spectres d'amplitude qui sont invariants par translation.

L'application d'un filtrage « passe-haut » permet d'éliminer l'information spectrale sur les basses fréquences. Les changements brutaux dans l'image, représentés par les hautes fréquences dans le domaine spectral, sont les plus significatifs pour effectuer le recalage.

Une fois les transformations d'homothétie et de rotation effectuées sur l'image à recaler, on obtient deux images 5a et 5d qui ont même facteur d'échelle et même orientation. Il faut déterminer le déplacement 2D (translation) entre ces deux images pour terminer le processus de recalage. De même que précédemment, les paramètres de translations peuvent être calculés par la méthode de corrélation de phase et le recalage final est effectué.

Ainsi, la méthode de traitement formant partie de l'invention permet d'obtenir avec un temps de calcul limité des données graphiques additionnelles directement superposables et comparables à l'image SAR, en utilisant le recalage effectué entre l'image optique à laquelle ces données graphiques sont associées et l'image SAR. Ces données additionnelles permettent une connaissance améliorée, plus précise, d'éléments géographiques de l'environnement dans l'image SAR (délimitation avec précision des bâtiments, localisation de chemins de fer, de routes, d'infrastructures diverses...).

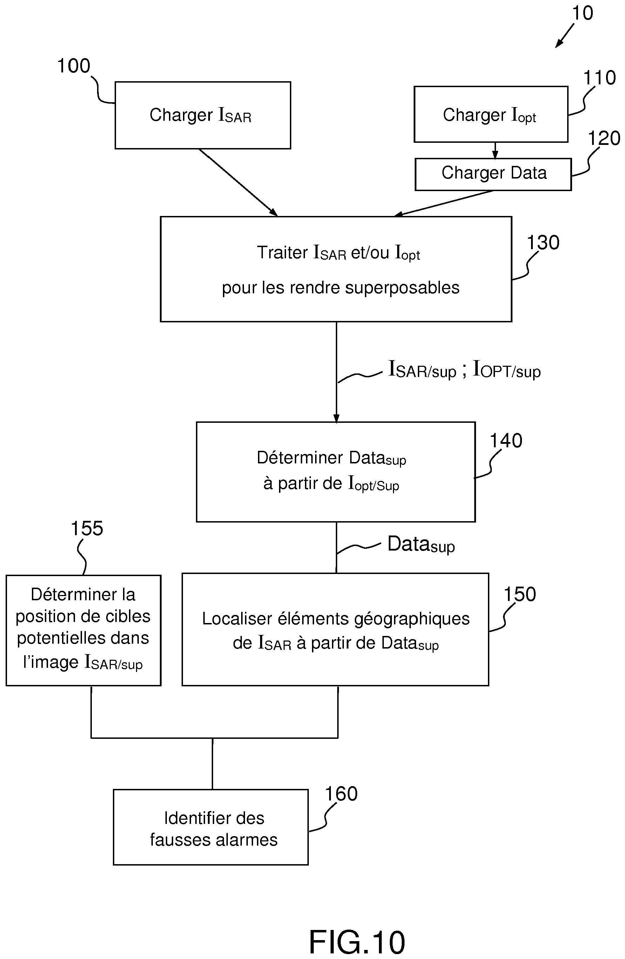

L'invention concerne une méthode 20 de détection de cibles comprenant une méthode de traitement 10 telle que décrite ci-dessus, et illustrée figure 10. Typiquement les éléments géographiques comprennent des structures fixées au sol, tel des bâtiments, les données graphiques additionnelles comprenant des formes géométriques approchées de ces structures fixées au sol.

Ainsi on obtient les contours précis des bâtiments, pour lesquels des artéfacts dans l'image radar peuvent être présents sous la forme de surbrillance à des angles réfléchissant des toits de bâtiments, ces contours étant directement comparables/superposables à l'image SAR.

La méthode de détection de cibles comprend une étape 155 de détection de la présence de cibles potentielles et de détermination de leur position par des algorithmes de traitement d'images opérés sur l'image SAR ou l'image superposée I_{SAR/sup}. Selon une variante préférée, un opérateur choisit le type de cible (ou objets d'intérêt) à rechercher, par exemple un char d'assaut ou un aéronef au sol, et l'algorithme de traitement d'image effectue préalablement, en parallèle ou à la suite des étapes du traitement 10, une recherche automatique de cibles potentielle du type choisi et de leur position dans l'image I_{SAR/sup}. La détection automatique d'une cible potentielle correspond à une alarme.

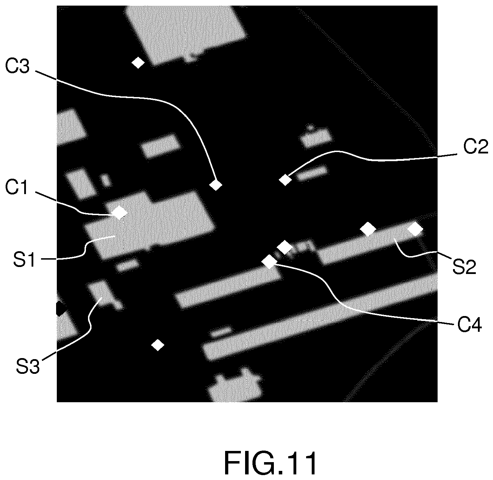

La méthode 20 de détection de cibles comprend en outre une étape 160 consistant à identifier d'éventuelles fausses alarmes parmi des alarmes générées par les algorithmes de traitement d'image pour la détection automatique d'objets d'intérêt (cibles potentielles), en comparant une position de cibles potentielles identifiées C1, C2, C3, C4 ...dans l'image radar superposée I_{SAR/sup} avec les formes géométriques approchées de structures fixées au sol S1, S2, S3...localisées à l'étape de localisation, tel qu'illustré figure 11.

En effet, l'imagerie SAR permet de détecter les objets « connus » de petite dimension (par exemple des camions ou des chars), tandis que les données graphiques additionnelles associées à l'imagerie optique donnent la situation géographique des bâtiments, ce qui permet d'améliorer la détection des cibles proches des bâtiments, en discriminant cibles réelles et artefacts dans l'image SAR. L'avantage de la méthode de détection de cibles 20 est ainsi d'exploiter les avantages de l'imagerie SAR pour détecter de petites cibles et d'éliminer les fausses détections à partir des données graphiques additionnelles disponibles associées à l'image optronique, en levant les ambigüités restantes sur une imagerie SAR.

Selon un mode de réalisation, la comparaison s'effectue sur des zones particulières de l'image SAR sélectionnées par l'opérateur et zoomées, car présentant une ambigüité.

Selon une variante illustrée figure 12, l'étape de comparaison est réalisée comme suit :
- la cible potentielle est considérée comme une fausse alarme lorsque sa position est localisée à l'intérieur d'une structure fixée au sol (par exemple la cible C1 de la figure 11),
- la cible potentielle est considérée comme une fausse alarme lorsque sa position est localisée à une distance (d) d'une structure fixée au sol inférieure à une distance minimum (Dmin) prédéterminée (par exemple la cible C4 de la figure 11),
- la cible potentielle est considérée comme une cible réelle lorsque sa position est localisée à une distance (d) d'une structure fixée au sol supérieure ou égale à la distance minimum (Dmin) prédéterminée (par exemple la cible C3 de la figure 11).

Ainsi si une cible potentielle détectée est située à une distance supérieure à une Dmin de toute infrastructure immobilière rendant non-ambigüe une détection, alors cette cible est considérée comme réelle ; ce seuil Dmin, en raison des distorsions existant sur l'image SAR et du recalage local imparfait qui en résulte, est fixée arbitrairement, suivant la taille moyenne de la cible. Si une cible potentielle détectée est située à une distance proche d'une infrastructure immobilière rendant ambigüe une détection, alors la levée de l'ambigüité est pour chaque cible potentielle détectée, la comparaison avec la situation géographique par exemple VMAP superposée afin de déterminer la distance la séparant d'une infrastructure immobilière.

Si une cible potentielle détectée est située à l'emplacement connu d'un bâtiment alors la détection est considérée comme erronée.

Un exemple de mise en œuvre de cette méthode de détection est illustré figures 13 à 15, pour le cas dans lequel l'image radar SAR est affichée à côté de l'image représentant les contours des structures fixées au sol (par exemple un masque binaire égal à la correspondance immobilière VMAP). La figure 13a illustre l'image I_{SAR} dans laquelle un point brillant, correspondant à une cible potentielle telle un char, est détecté. En comparant la position de ce point brillant avec les données Dataₛᵤₚ illustrée figures 13b correspondant à la position précise du contour bâtiment générée selon la méthode de traitement décrite plus haut, on déduit que la distance de la cible potentielle au bâtiment est trop faible et qu'il s'agit d'un artefact, et donc la cible potentielle est classée comme une fausse alerte.

Dans le cas de la figure 14 la cible détectée en 14a est suffisamment éloignée d'un bâtiment affiché en 14b, et la cible détectée est classée comme cible réelle.

Dans le cas de la figure 15 la cible détectée en 15a est éloignée de tout bâtiment (aucun bâtiment sur 15c) et est donc classée comme cible réelle.

Ainsi, grâce à l'utilisation des données VMAP superposées à l'image SAR, certaines détections automatiques d'objets d'intérêt proches ou superposées à des bâtiments peuvent alors être considérées comme des fausses détections et donc être éliminées dans cette phase finale de traitement.

## Revendications

1. Méthode de détection de cible (20) comprenant un traitement d'une image radar de type SAR, comprenant les étapes consistant à :
- Charger (100) une image radar initiale (I_{SAR}) de type SAR d'une première zone,
- Charger (110) une image optique initiale (Iₒₚₜ) d'une deuxième zone recouvrant au moins partiellement la première zone,
lesdites images initiales ayant été le cas échéant prétraitées de sorte qu'elles présentent un même axe d'acquisition,
- Charger (120) des données graphiques additionnelles (Data) associées à l'image optique initiale et relatives à des éléments géographiques présents dans ladite image optique initiale, les éléments géographiques comprenant des structures fixées au sol et les données graphiques additionnelles comprenant des formes géométriques approchées desdites structures fixées au sol,
- Traiter (130) au moins une des deux images initiales de manière à les rendre apte à être superposées dans une zone de recouvrement entre la première et la deuxième zone, pour obtenir une image radar superposée (I_{SAR/sup}) et une image optique superposée (I_{opt/sup}),
- Déterminer (140) des données graphiques additionnelles superposées (Dataₛᵤₚ) à partir des données graphiques additionnelles (Data) et de l'image optique superposée (I_{opt/sup}),
- Localiser (150) des éléments géographiques présents dans l'image SAR superposée (I_{SAR/sup}) au moins à partir desdites données graphiques additionnelles superposées (Dataₛᵤₚ).
- Déterminer (155) des positions de cibles potentielles à partir de l'image SAR superposée,
- Identifier (160) d'éventuelles fausses alarmes en comparant la position de cibles potentielles identifiées dans l'image radar superposée avec des formes géométriques approchées de structures fixées au sol localisées à l'étape de localisation.

2. Méthode selon la revendication 1 dans laquelle l'étape de traitement est effectuée sur l'image optique (Iₒₚₜ) uniquement, l'image radar initiale (I_{SAR}) étant alors égale à l'image radar superposée (I_{SAR/sup}).

3. Méthode selon l'une des revendications 1 ou 2 dans laquelle l'image radar initiale est ortho-rectifiée.

4. Méthode selon l'une des revendications précédentes dans laquelle l'image optique initiale est une image par satellite ortho-rectifiée.

5. Méthode selon l'une des revendications précédentes dans laquelle les éléments géographiques comprennent des frontières et/ou des réseaux de chemin de fer et/ou des réseaux hydrographiques et/ou des contours d'élévations et/ou des côtes, et/ou des contours approchés de structures fixées au sol et/ou des aéroports et/ou des lieux habités et/ou des index de noms géographiques.

6. Méthode selon l'une des revendications précédentes dans laquelle les données graphiques additionnelles sont affichées dans les images optiques sous la forme de traits et/ou de lignes et/ou de contours et /ou de formes géométriques et/ou de caractères.

7. Méthode selon la revendication 6 dans laquelle les données graphiques additionnelles sont des informations vectorielles cartographiques de type Vmap.

8. Méthode selon l'une des revendications précédentes dans laquelle l'étape de traitement comprend une étape de détermination d'au moins un ensemble (Prec) de paramètres de recalage comprenant un facteur d'homothétie (h), un angle de rotation (α) et une distance de translation (d).

9. Méthode selon la revendication 8 dans laquelle l'étape de détermination des données graphiques additionnelles superposées comprend une étape consistant à appliquer ledit ensemble de paramètres de recalage aux données graphiques additionnelles (Data), pour obtenir les données graphiques additionnelles superposées (Dataₛᵤₚ).

10. Méthode selon l'une des revendications 8 ou 9 dans laquelle l'étape de détermination des paramètres de recalage s'effectue à partir de la transformée de Fourrier-Mellin.

11. Méthode selon l'une des revendications 1 à 10 dans laquelle l'étape de localisation comprend une étape de fusion des données graphiques additionnelles superposées (Dataₛᵤₚ) dans l'image radar superposée (I_{SAR/sup}).

12. Méthode de détection de cibles selon l'une des revendications précédentes dans laquelle :
* la cible potentielle est considérée comme une fausse alarme lorsque sa position est localisée à l'intérieur d'une structure fixée au sol,
* la cible potentielle est considérée comme une fausse alarme lorsque sa position est localisée à une distance (d) d'une structure fixée au sol inférieure à une distance minimum (Dmin) prédéterminée,
* la cible potentielle est considérée comme une cible réelle lorsque sa position est localisée à une distance (d) d'une structure fixée au sol supérieure ou égale à la distance minimum (Dmin) prédéterminée.

## Patentansprüche

1. Verfahren zum Erkennen eines Ziels (20), beinhaltend eine Verarbeitung eines Radarbildes vom Typ SAR, folgende Schritte beinhaltend:
- Laden (100) eines anfänglichen Radarbildes (I_{SAR}) vom Typ SAR eines ersten Bereichs,
- Laden (110) eines anfänglichen optischen Bildes (Iₒₚₜ) eines zweiten Bereichs, welches mindestens teilweise den ersten Bereich überlappt,
wobei die anfänglichen Bilder gegebenenfalls aufbereitet wurden, so dass sie eine gleiche Erfassungsachse aufweisen,
- Laden (120) zusätzlicher grafischer Daten (Data), welche dem anfänglichen optischen Bild zugeordnet sind und sich auf in dem anfänglichen optischen Bild vorhandene geografische Elemente beziehen, wobei die geografischen Elemente am Boden befestigte Strukturen und die zusätzlichen grafischen Daten beinhalten, welche geometrische Formen beinhalten, welche den am Boden befestigten Strukturen angenähert sind,
- Verarbeiten (130) von mindestens einem der beiden anfänglichen Bilder, um es/sie in die Lage zu versetzen, in einem Überlappungsbereich zwischen dem ersten und dem zweiten Bereich überlagert zu werden, um ein überlagertes Radarbild (I_{SAR/sup}) und ein überlagertes optisches Bild (I_{opt/sup}) zu erzielen,
- Bestimmen (140) überlagerter zusätzlicher grafischer Daten (Dataₛᵤₚ) anhand der zusätzlichen grafischen Daten (Data) und des überlagerten optischen Bildes (I_{opt/sup}),
- Lokalisieren (150) von in dem überlagerten SAR-Bild (I_{SAR/sup}) vorhandenen geographischen Elementen, zumindest anhand der zusätzlichen überlagerten grafischen Daten (Dataₛᵤₚ),
- Bestimmen (155) der Positionen potentieller Ziele anhand des überlagerten SAR-Bildes,
- Identifizieren (160) eventueller falscher Alarme durch Vergleichen der Position von in dem überlagerten Radarbild identifizierten potentiellen Zielen mit angenäherten geometrischen Formen von am Boden befestigten Strukturen, welche im Schritt der Lokalisierung lokalisiert wurden.

2. Verfahren nach Anspruch 1, bei welchem der Schritt des Verarbeitens am optischen Bild (Iₒₚₜ) allein erfolgt, wobei das anfängliche Radarbild (I_{SAR}) folglich gleich dem überlagerten Radarbild (I_{SAR/sup}) ist.

3. Verfahren nach einem der Ansprüche 1 oder 2, bei welchem das anfängliche Radarbild ortho-entzerrt wird.

4. Verfahren nach einem der vorhergehenden Ansprüche, bei welchem das anfängliche optische Bild ein ortho-entzerrtes Satellitenbild ist.

5. Verfahren nach einem der vorhergehenden Ansprüche, bei welchem die geografischen Elemente Grenzen und/oder Schienennetze und/oder hydrografische Netze und/oder Konturen von Erhebungen und/oder Küsten und/oder angenäherte Konturen von am Boden befestigten Strukturen und/oder Flughäfen und/oder Wohngebiete und/oder Indizes geografischer Namen beinhalten.

6. Verfahren nach einem der vorhergehenden Ansprüche, bei welchem die zusätzlichen grafischen Daten in den optischen Bildern in Form von Strichen und/oder Linien und/oder Konturen und/oder geometrischen Formen und/oder Buchstaben angezeigt werden.

7. Verfahren nach Anspruch 6, bei welchem die zusätzlichen grafischen Daten vektorielle kartografische Informationen vom Typ Vmap sind.

8. Verfahren nach einem der vorhergehenden Ansprüche, bei welchem der Schritt des Verarbeitens einen Schritt des Bestimmens von mindestens einer Gruppe (Prec) von Neueinstellungsparametern beinhaltet, welche einen Homothetiefaktor (h), einen Drehwinkel (α) und einen Verschiebungsabstand (d) beinhaltet.

9. Verfahren nach Anspruch 8, bei welchem der Schritt des Bestimmens der zusätzlichen überlagerten grafischen Daten einen Schritt beinhaltet, welcher darin besteht, die Gruppe von Neueinstellungsparametern auf die zusätzlichen grafischen Daten (Data) anzuwenden, um zusätzliche überlagerte grafische Daten (Dataₛᵤₚ) zu erzielen.

10. Verfahren nach einem der Ansprüche 8 oder 9, bei welchem der Schritt des Bestimmens von Neueinstellungsparametern anhand der Fourrier-Mellin-Transformierten erfolgt.

11. Verfahren nach einem der Ansprüche 1 bis 10, bei welchem der Schritt des Lokalisierens einen Schritt der Fusion der überlagerten zusätzlichen grafischen Daten (Dataₛᵤₚ) in dem überlagerten Radarbild (I_{SAR/sup}) beinhaltet.

12. Verfahren zur Erkennung von Zielen nach einem der vorhergehenden Ansprüche, bei welchem:
* das potentielle Ziel als ein falscher Alarm betrachtet wird, wenn seine Position innerhalb einer am Boden befestigten Struktur lokalisiert wird,
* das potentielle Ziel als ein falscher Alarm betrachtet wird, wenn seine Position in einem Abstand (d) von einer am Boden befestigten Struktur lokalisiert wird, welcher einen vorbestimmten Mindestabstand (Dmin) unterschreitet,
* das potentielle Ziel als ein tatsächliches Ziel betrachtet wird, wenn seine Position in einem Abstand (d) von einer am Boden befestigten Struktur lokalisiert wird, welcher größer als der vorbestimmte Mindestabstand (Dmin) oder gleich diesem ist.

## Claims

1. Method (20) for detecting a target comprising a processing of a radar image of the SAR type, comprising the steps involving:
- loading (100) an initial radar image (I_{SAR}) of the SAR type of a first zone,
- loading (110) an initial optical image (Iₒₚₜ) of a second zone which at least partially covers the first zone,
the initial images having been, if necessary, pre-processed so that they have the same acquisition axis,
- loading (120) additional graphic data (Data) associated with the initial optical image and relating to geographical elements present in the initial optical image, the geographical elements comprising structures which are fixed to the ground and the additional graphic data comprising geometric shapes which are close to the structures fixed to the ground,
- processing (130) at least one of the two initial images in order to make them capable of being superimposed in a coverage zone between the first zone and the second zone in order to obtain a superimposed radar image (I_{SAR}/ₛᵤₚ) and a superimposed optical image (I_{opt/sup}),
- determining (140) additional superimposed graphic data (Dataₛᵤₚ) from the additional graphic data (Data) and the superimposed optical image (I_{opt/sup}),
- locating (150) geographical elements present in the superimposed SAR image (I_{SAR/sup}) at least from the additional superimposed graphic data (Dataₛᵤₚ),
- determining (155) positions of potential targets from the superimposed SAR image,
- identifying (160) potentially false alarms by comparing the position of potential targets identified in the radar image superimposed with geometric shapes close to structures which are fixed to the ground located in the location step.

2. Method according to claim 1, wherein the processing step is carried out on the optical image (Iₒₚₜ) only, the initial radar image (I_{SAR}) being thus equal to the superimposed radar image (I_{SAR/sup}).

3. Method according to either claim 1 or claim 2, wherein the initial radar image is ortho-rectified.

4. Method according to any one of the preceding claims, wherein the initial optical image is an ortho-rectified satellite image.

5. Method according to any one of the preceding claims, wherein the geographical elements comprise borders and/or rail networks and/or hydrographical networks and/or contours of elevations and/or coasts, and/or contours close to structures fixed to the ground and/or airports and/or inhabited locations and/or indexes of geographic names.

6. Method according to any one of the preceding claims, wherein the additional graphic data are displayed in the optical images in the form of broken lines and/or lines and/or contours and/or geometric shapes and/or characters.

7. Method according to claim 6, wherein the additional graphic data are cartographic vectorial information items of the Vmap type.

8. Method according to any one of the preceding claims, wherein the processing step comprises a step of determining at least one set (Prec) of recalibration parameters comprising a homothety factor (h), a rotation angle (α) and a translation distance (d).

9. Method according to claim 8, wherein the step of determining the superimposed additional graphic data comprises a step involving applying the recalibration parameter set to the additional graphic data (Data) in order to obtain the superimposed additional graphic data (Dataₛᵤₚ).

10. Method according to either claim 8 or claim 9, wherein the step of determining recalibration parameters is carried out based on the Fourrier-Mellin transform.

11. Method according to any one of claims 1 to 10, wherein the location step comprises a step of merging the superimposed additional graphic data (Dataₛᵤₚ) in the superimposed radar image (I_{SAR/sup}).

12. Method for detecting targets according to any one of the preceding claims, wherein:
* the potential target is considered to be a false alarm when the position thereof is located inside a structure fixed to the ground,
* the potential target is considered to be a false alarm when the position thereof is located at a distance (d) from a structure fixed to the ground less than a predetermined minimum distance (Dmin),
* the potential target is considered to be a real target when the position thereof is located at a distance (d) from a structure fixed to the ground greater than or equal to the predetermined minimum distance (Dmin).
